# DEMANDE DE BREVET EUROPEEN

(11) **EP 1 416 070 A1**
(43) Date de publication de la demande: **06.05.2004**
(21) Numéro de dépôt: 03300115.7
(22) Date de dépôt: 11.09.2003
(51) Int. Cl.: D01D 5/34, G02B 6/18

(54) **Procédé de fabrication d'une fibre optique plastique à gradient d'indice et dispositif de formation de préforme pour la mise en oeuvre d'un tel procédé**

(30) Priorité: 13.09.2002 FR 0211521
(71) Demandeur: Nexans, 75008 Paris (FR)
(72) Inventeur: Daboussy, David, 69003 Lyon (FR); Pinto, Olivier, 69003 Lyon (FR); Alric, Jérôme, 69004 LyoN (FR); Fournier, Jérôme, 69003 Lyon (FR)
(74) Mandataire: Feray, Valérie

(57) **Abrégé**

La présente invention se rapporte à un procédé de fabrication d'une fibre optique plastique à gradient d'indice, l'indice de réfraction variant entre le centre et la périphérie, ledit procédé comprenant les opérations suivantes : la préparation d'au moins deux compositions liquides (12, 13) d'indices de réfraction différents, chaque composition comprenant au moins un polymère, un composé apte à faire varier l'indice de réfraction et un amorceur de réticulation étant présents dans au moins l'une desdites compositions, le remplissage d'un dispositif dit de formation de préforme (1) avec lesdites compositions, la réalisation d'une préforme liquide dans ledit dispositif, l'indice de réfraction de ladite préforme présentant un gradient donné, le filage de ladite préforme de façon à obtenir une fibre optique plastique à gradient d'indice. Le procédé est caractérisé en ce que la réalisation de la préforme comprend une étape sensiblement sans écoulement desdites compositions le long dudit dispositif.

## Description

La présente invention concerne un procédé de fabrication d'une fibre optique plastique à gradient d'indice et un dispositif de formation de préforme pour la mise en oeuvre d'un tel procédé.

Les fibres optiques plastiques à gradient d'indice, utilisables dans une gamme spectrale couvrant le visible jusqu'au proche infrarouge, sont intéressantes en ce qu'elles peuvent être appliquées aux réseaux d'accès large bande.

La fabrication de telles fibres optiques plastiques est délicate, en ce qu'il s'agit de contrôler la distribution du ou des composés variant du coeur à la périphérie d'une fibre optique plastique pour l'obtention du gradient d'indice désiré.

La variation d'indice de réfraction entre le centre et la périphérie de la fibre est par exemple comprise entre 0,01 et 0,03.

Le document EP 106722A1 décrit un procédé de fabrication d'une fibre optique plastique à gradient d'indice, l'indice de réfraction variant continûment entre le centre et la périphérie.

Le procédé comprend :
- la préparation de deux compositions d'indice de réfraction différent,
- le remplissage par les compositions de réservoirs isolés d'un dispositif à mélangeur,
- le mélange des compositions dans un mélangeur dont la partie supérieure contient une cartouche à billes de façon à obtenir, dans la partie inférieure du mélangeur, une préforme liquide dont l'indice présente un gradient,
- la réduction du diamètre de ladite préforme qui conserve un gradient d'indice, ceci à l'aide d'une partie conique prolongeant la partie inférieure du mélangeur,
- le filage de la préforme de diamètre réduit de façon à obtenir une fibre optique plastique à gradient d'indice,
- une phoréticulation conduisant à un réseau tridimensionnel réticulé,
- le bobinage de la fibre optique plastique à gradient d'indice réticulée.

L'ensemble du procédé est réalisé en continu et notamment l'étape de mélange des compositions se fait en modifiant les écoulements sous pression des compositions.

Le temps de mélange n'est pas adapté pour obtenir une préforme avec le gradient d'indice souhaité.

L'invention a pour premier but de fournir un procédé de fabrication de fibre optique à gradient d'indice, gradient continu ou discontinu par saut(s), permettant de mieux contrôler le gradient d'indice souhaité.

A cet effet la présente invention propose un procédé de fabrication d'une fibre optique plastique à gradient d'indice, l'indice de réfraction variant entre le centre et la périphérie, ledit procédé comprenant les opérations suivantes:
- la préparation d'au moins deux compositions liquides d'indices de réfraction différents, chaque composition comprenant au moins un polymère, un composé apte à faire varier l'indice de réfraction étant présent dans au moins l'une desdites compositions et un amorceur de réticulation étant présent dans au moins l'une desdites compositions,
- le remplissage d'un dispositif dit de formation de préforme avec lesdites compositions,
- la réalisation d'une préforme liquide dans ledit dispositif, l'indice de réfraction de la préforme présentant un gradient donné,
- le filage de ladite préforme de façon à obtenir une fibre optique plastique à gradient d'indice,
**ledit procédé étant caractérisé en ce que** la réalisation de la préforme comprend une étape sensiblement sans écoulement desdites compositions le long dudit dispositif.

Selon l'invention, la réalisation de la préforme peut ici se faire sans les contraintes liées à l'écoulement des compositions, contraintes présentes dans le procédé continu de l'art antérieur. En supprimant la corrélation entre la vitesse de réalisation de la préforme et la vitesse de son filage, l'invention libère les contraintes sur le temps maximal de réalisation de la préforme.

L'invention consiste ainsi à découpler la réalisation d'une préforme liquide (autrement dit une colonne) de son filage par exemple en les dissociant temporellement l'une de l'autre.

L'invention offre une grande flexibilité dans la réalisation de la fibre. La mise en oeuvre du procédé est très facile et très rapide. Un tel procédé par préforme liquide permet d'adapter la phase en amont du filage à la structure de la fibre désirée (Sl, Gl, profils complexes) sans modifier les outils de filage. Le temps de réalisation de la préforme peut être ajusté en fonction des caractéristiques des compositions choisies (structure, viscosité etc...), de la température du dispositif, ainsi que de la nature des interactions entre les compositions et de la cinétique de ces interactions.

La réalisation de la préforme liquide pourra partiellement ou entièrement se faire dans un laboratoire de chimie, à l'issu d'une phase de distillation et de façon parfaitement contrôlée (atmosphère contrôlée, zéro pollution, pureté optique...) pour garantir une très grande pureté.

De plus, la technique de réalisation de la fibre selon l'invention peut s'adapter sans développement préalable à un grande variété de compositions.

Une préforme liquide est beaucoup plus facile à réaliser qu'une préforme solide obtenue par des procédé d'extrusion, ou par fusion de granulés ou de joncs.

Le gradient d'indice peut être discontinu - de type saut d'indice - ou continu (linéaire, hyperbolique ou tout autre profil).

Dans un premier mode de réalisation du procédé selon l'invention, l'étape sensiblement sans écoulement comporte une étape d'obtention d'un diamètre de la préforme compatible avec ledit filage.

On entend par diamètre compatible avec ledit filage un diamètre jusqu'à 20-30 fois environ supérieur au diamètre souhaité pour la fibre finale.

Le mode de réalisation est mis en oeuvre par exemple à l'aide d'un dispositif de formation de préforme ayant une partie cylindrique débouchant sur une partie conique de diamètre réduit en sortie, le dispositif étant tel que la préforme est obtenue sur toute la longueur du dispositif. La filière peut elle même être à section droite ou rétrécie en sortie.

Dans un deuxième mode de réalisation du procédé selon l'invention, la réalisation de la préforme comporte ladite étape sensiblement sans écoulement suivie d'une étape d'obtention d'une dimension radiale de la préforme compatible avec ledit filage.

Un tel procédé correspond par exemple au cas où est utilisé un dispositif de formation de préforme à section constante. Dans cette configuration, le dispositif permet l'obtention d'une préforme d'indice ayant le type de gradient souhaité. Une fois obtenue, le dispositif est par exemple disposé sur une pièce rapportée par exemple conique intégrant une filière en sortie.

Dans un mode de réalisation du procédé selon l'invention, le remplissage est tel que les compositions sont séparées dans le dispositif de formation de préforme et la réalisation de la préforme à gradient d'indice discontinu par saut(s) d'indice comprend la mise en contact des compositions.

Après le remplissage, plusieurs actions peuvent permettre de d'obtenir une préforme à gradient d'indice continu.

Il est notamment possible d'appliquer diverses méthodes pour obtenir un gradient continu de concentration en espèces chimiques entre le centre et la périphérie de la préforme, ce gradient de concentration se traduisant par un gradient d'indice de réfraction.

Aussi, avantageusement, la réalisation de la préforme à gradient d'indice continu peut comprendre de préférence le changement de répartition entre le centre et la périphérie de la préforme d'au moins l'un des constituants d'au moins l'une des compositions, par un traitement mécanique choisi de préférence parmi la mise en rotation ou la vibration.

La mise en rotation peut accélérer une interdiffusion des compositions. La vibration, par exemple par envoi d'ultrasons dans le milieu, engendre quant à elle des déplacements moléculaires. On obtient alors une préforme liquide dans laquelle la répartition radiale (ou la structure) des différentes compositions est contrôlée sur toute sa longueur afin de correspondre à un gradient d'indice continu ad hoc dans la fibre finale.

Le filage peut être précédé d'une mise sous pression dudit dispositif pour un écoulement dynamique de la préforme, la mise sous pression étant réalisée au choix par l'injection d'un gaz neutre comprimé dans le dispositif de formation de préforme ou par l'actionnement d'un piston dans le dispositif de formation de préforme.

L'invention vise aussi à fournir un équipement de mise en oeuvre d'un procédé de fabrication de fibre optique à gradient d'indice, gradient continu ou discontinu par saut(s), permettant de mieux contrôler le gradient d'indice souhaité.

A cet effet, l'invention propose un , dispositif de formation de préforme pour la mise en oeuvre du procédé de fabrication d'une fibre optique plastique à gradient d'indice tel que décrit précédemment, dispositif comprenant une première zone pour l'isolation des compositions lors dudit remplissage et une deuxième zone de formation de préforme à gradient d'indice, **caractérisé en ce que** la première zone et la deuxième zone ont au moins une partie commune.

Avantageusement le dispositif de formation de préforme peut comprendre autant d'enceintes concentriques d'axe donné et de dimensions internes données que de compositions à injecter, l'enceinte externe étant prolongée axialement par un élément à dimension interne variable et la ou les enceintes internes étant amovibles et de longueurs supérieures à la longueur de l'enceinte externe.

Le dispositif de formation de préforme peut comprendre un moyen de traitement mécanique choisi parmi un moyen de mise en vibration des compositions et un moyen de mise en rotation des compositions.

Le moyen de mise en vibration peut comprendre un transducteur ultrasonore couplé à une sonotrode.

Le dispositif de formation de préforme peut inclure un élément de filage, qui reçoit axialement l'élément à dimension interne variable et ledit élément de filage peut contenir un obturateur amovible.

L'invention sera mieux comprise et d'autres caractéristiques et avantages apparaîtront à la lecture de la description qui va suivre, donnée à titre non limitatif, par référence aux figures 1 à 3. Dans ces figures, les éléments communs portent les mêmes numéros de référence.

La figure 1 représente une vue en coupe schématique d'un premier dispositif de formation et de filage de préforme à saut d'indice dans lequel est mis en oeuvre un premier mode de réalisation du procédé selon l'invention.

La figure 2 représente une vue en coupe schématique d'un deuxième dispositif de formation et de filage de préforme à gradient d'indice continu dans lequel est mis en oeuvre un deuxième mode de réalisation du procédé selon l'invention.

La figure 3 représente une vue schématique des éléments utilisés après filage lors de la mise en oeuvre du procédé de fabrication d'une fibre optique plastique à gradient d'indice.

Le procédé selon l'invention comprend la préparation de deux compositions liquides (moyen de préparation non représenté), comprenant par exemple chacune le même polymère P contenant de préférence au moins un groupement fonctionnel réactif et le ou les mêmes composés M1, M2 respectivement qui sont de préférence des monomères contenant chacun au moins un groupement fonctionnel réactif, M2 étant d'indice de réfraction distinct de M1.

Les concentrations M1 et/ou M2 sont différentes dans chaque composition ce qui donne un indice de réfraction différent à chacune des compositions. La différence d'indice de réfraction entre les compositions de coeur et de gaine est comprise par exemple entre 0,01 et 0,03.

La première des compositions, dite composition de coeur est à plus fort indice de réfraction. La deuxième desdites compositions, dite composition de coeur est à plus faible indice de réfraction. Un amorceur de réticulation par exemple de type photoamorceur est présent dans au moins l'une desdites compositions.

Pour la méthode de préparation et le choix des compositions de coeur et de gaine on peut reprendre les exemples 1, 2 et 4 de la demande de l'art antérieur citée précédemment pour les deux modes de réalisation présentés ci-après.

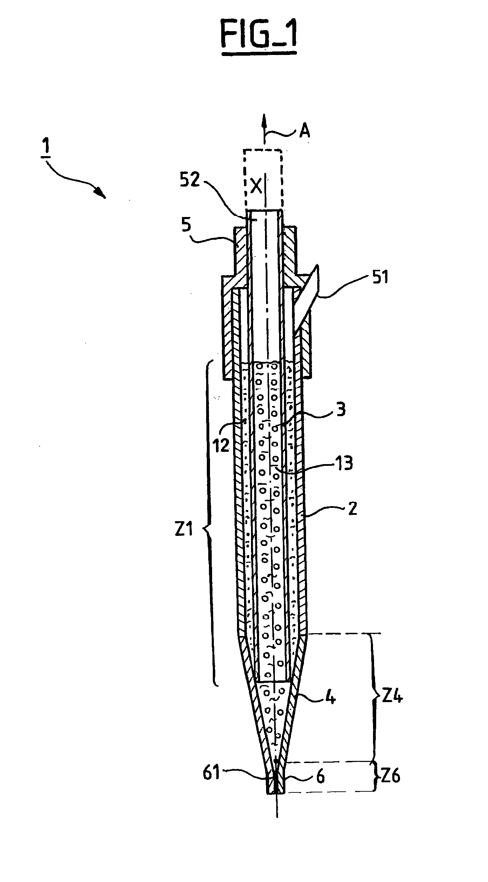

La figure 1 représente une vue en coupe schématique, dans un plan d'axe X, d'un premier dispositif 1 de formation et de filage de préforme par exemple à saut d'indice dans lequel est mis en oeuvre un premier mode de réalisation du procédé selon l'invention.

Le premier dispositif 1 comporte deux tubes concentriques 2, 3 de même axe central X. Le tube externe 2 de diamètre égal à 45 mm et de longueur égale à 200 mm est prolongé axialement par un élément de forme conique 4 de diamètre réduit en sortie sensiblement égal à 2,5 mm. Le tube central 3 de diamètre égal 32 mm est amovible, de longueur supérieure à 200 mm et repose sur les parois de l'élément conique 4 .

Le premier dispositif 1 comporte en outre une fermeture supérieure étanche 5 qui comporte une entrée 51 débouchant latéralement sur le tube externe 2 pour l'injection de la composition de gaine. Un alésage central 52 de cette fermeture 5 permet le placement ou le retrait du tube central 3.

En outre, un moyen (non représenté) disposé au niveau de l'alésage central tel qu'un moyen d'injection de gaz neutre comprimé ou un piston a pour fonction d'assurer une pression contrôlée dans le dispositif.

Dans cet exemple, le premier dispositif 1 comprend aussi une filière 6 d'axe central X, de diamètre égal à 2,5 mm, de longueur égale à 15 mm et recevant l'élément conique 4. La filière 6 définit une zone calibrée Z6 qui donne l'ordre de grandeur désiré au diamètre d'une fibre optique à gradient d'indice obtenue. La filière 6 contient un obturateur amovible 61.

Dans une variante, la filière 6 est une pièce rapportée ce qui permet de changer aisément de calibrage sans avoir à changer de dispositif.

On décrit maintenant les étapes du procédé mis en oeuvre.

Lors de la phase de remplissage, la filière 6 est bouchée, le tube externe 2 sert de réservoir à la composition de gaine 12 tandis que la composition de coeur 13, de plus fort indice de réfraction, est placée dans le tube central 3 et l'élément conique 5.

Par le retrait du tube central 3 dans le sens de la flèche A (retrait symbolisé par les pointillés) les compositions 12, 13 sont mises en contact et forment ainsi une préforme liquide (non représentée) dont l'indice présente le saut souhaité. La zone Z1 initialement réservée à l'isolation des compositions correspond alors à la zone de formation de la préforme à saut d'indice. Conformément à l'invention, cette préforme est obtenue sans écoulement des compositions de coeur et de gaine le long du dispositif 1 de sorte que la vitesse de réalisation de la préforme ne dépend plus de la vitesse de filage. En ce sens le procédé selon l'invention est discontinu.

Après retrait de l'obturateur 61 et la mise sous pression contrôlée - typiquement entre 0,5 et 5 bars - du dispositif 1, la préforme liquide (non représentée) s'écoule suivant l'axe X dans la zone Z4 de l'élément conique 4 et est ainsi amenée par à la filière calibrée 6. La préforme subit dans cette zone une variation homothétique de son diamètre jusqu'à un diamètre compatible avec le filage tout en conservant un indice de réfraction discontinu par saut.

Durant l'écoulement de la préforme vers la filière 6, il est possible selon une variante non représentée de disposer un système de refroidissement cryogénique autour de l'élément conique 4. Un tel système permet d'augmenter progressivement la viscosité de la préforme jusqu'à une valeur supérieure à 50 Pa.s pour obtenir un liquide relativement figé de façon à ratentir son écoulement. Dans la filière 6, la viscosité est rétablie entre 1 et 5 Pa.s.

Dans une variante (non représentée), le dispositif 1 est modifié pour comprendre un tube amovible supplémentaire d'axe X de façon à obtenir une fibre à multisaut d'indice.

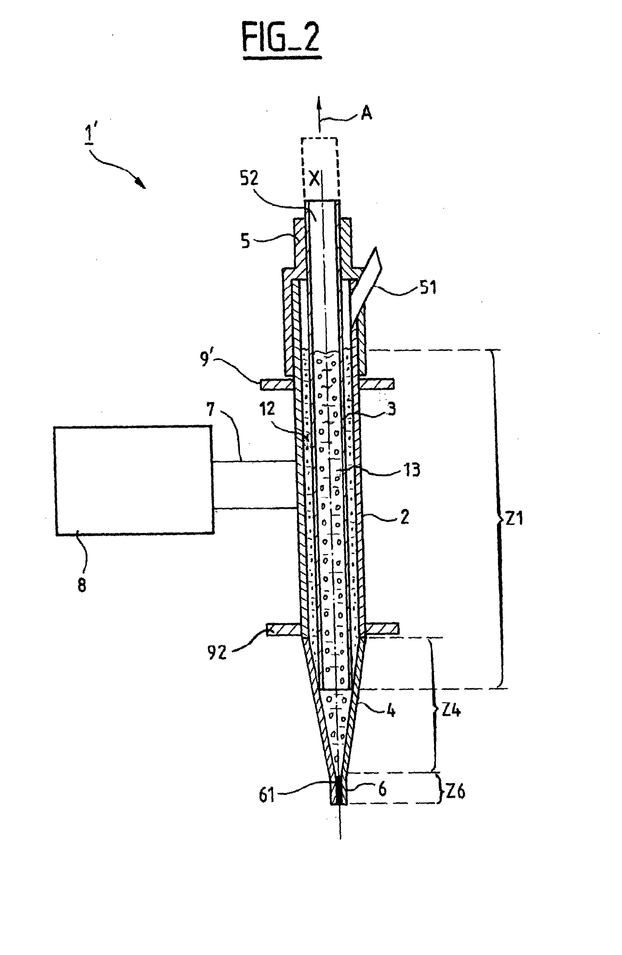

La figure 2 représente une vue en coupe schématique, dans un plan d'axe X, d'un deuxième dispositif 1' de formation et de filage de préforme par exemple à gradient d'indice continu dans lequel est mis en oeuvre un deuxième mode de réalisation du procédé selon l'invention.

De manière similaire au premier dispositif, le deuxième dispositif 1' comporte, suivant un même axe central X, une fermeture supérieure étanche 5, deux tubes concentriques 2, 3, un élément de forme conique 4 suivi d'une filière 6 contenant un obturateur amovible 61. La fermeture 5 comporte une entrée 51 débouchant latéralement sur le tube externe 2 et un alésage central 52.

De même, un moyen (non représenté) disposé au niveau dudit alésage central tel qu'un moyen d'injection de gaz neutre comprimé ou un piston a pour fonction d'assurer une pression contrôlée dans le deuxième dispositif 1'.

La zone Z1 définit la zone réservée à l'isolation des compositions de gaine et de coeur 12, 13 lors du remplissage.

La filière 6 définit une zone calibrée Z6 qui donne l'ordre de grandeur désiré au diamètre d'une fibre optique à gradient d'indice obtenue.

Le deuxième dispositif 1' comporte en outre une sonotrode 7 pour transmettre des vibrations mécaniques à une fréquence ultrasonore, de l'ordre de 20000 hertz. La sonotrode 7 est mise en vibration par un transducteur 8 transformant l'énergie électrique en vibrations mécaniques.

Lors de la phase de remplissage, le tube externe 2 sert de réservoir à la composition de gaine 12 tandis que la composition de coeur 13, de plus fort indice de réfraction, est placée dans le tube central 3 et l'élément conique 5.

Par le retrait du tube central 3 dans le sens de la flèche A (retrait symbolisé par les pointillés), les compositions 12, 13 sont mises en contact et forment une préforme liquide (non représentée) ayant une certaine répartition des compositions.

La mise en marche du transducteur 8 et de la sonotrode 7 génère une mise en vibration ultrasonore des compositions de gaine et de coeur 12, 13 modifiant leurs répartitions radiales sur toute la zone Z1 devenant la zone de formation d'une préforme à gradient d'indice continu. Par ailleurs, des éléments de découplage 91, 92 disposés autour du tube externe 2 limitent les vibrations de ce tube.

Conformément à l'invention, cette préforme est obtenue sans écoulement des compositions de coeur et de gaine le long du dispositif 1'. On obtient de cette façon un gradient mieux contrôlé en ajustant le temps de réalisation de la préforme.

Après retrait de l'obturateur 61 et mise sous pression contrôlée - typiquement entre 0,5 et 5 bars - du deuxième dispositif 1', la préforme (non représentée) s'écoule dans la zone Z4 de l'élément conique 4 jusquà atteindre la filière 6. La variation de concentration des compositions est conservée pour la préforme de diamètre réduit.

Selon une variante, on peut chauffer les compositions de coeur et de gaine 13, 12 lors du remplissage en plaçant des éléments calorifugés (non représentés) autour du tube externe 2 et du tube central 3, jusqu'à obtention de la viscosité désirée pour les compositions par exemple comprise entre 1 et 5 Pa.s. Ceci permet de faciliter la mise en oeuvre du procédé selon l'invention, car une telle viscosité donne des compositions relativement fluides, répondant mieux à la mise en vibration ultrasonore.

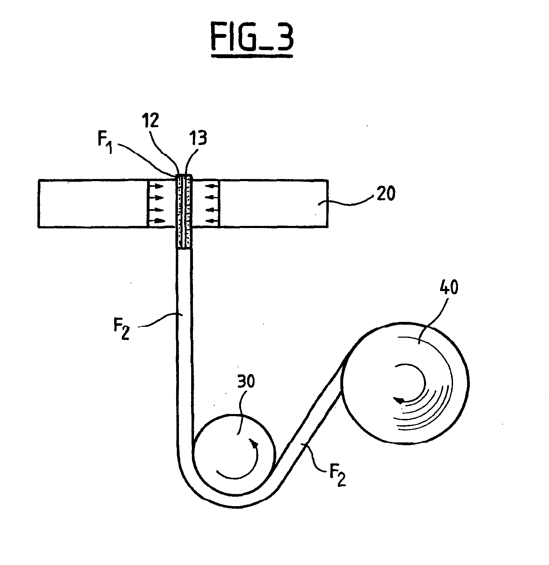

La figure 3 montre une vue schématique des éléments de mise en oeuvre du procédé de fabrication d'une fibre optique plastique à gradient d'indice utilisés après le filage suivant les premier ou deuxième modes de réalisation.

Ces éléments sont les suivants : un source de rayons Ultra Violets (UV) 20, un cabestan 30 et une bobine 40.

En sortie de filière, le fil obtenu est une fibre optique plastique à gradient d'indice F₁ durcie par photoréticulation à l'aide de la source de rayons UV 20 en une fibre optique plastique F₂ comportant une structure réticulé. Puis, au moyen du cabestan 30, la fibre optique plastique est enroulée sur la bobine 40. Le diamètre de la fibre est donné par la filière, mais il peut être affiné selon la force de traction réalisée au moyen du cabestan. On peut utiliser indifférement l'une des fibres optiques plastiques F₁ ou F₂ en tant que produit fini selon l'invention.

La réticulation permet avantageusement de figer pratiquement totalement les composants de la fibre optique plastique, et assure donc une meilleure stabilité physique et thermique de la fibre optique plastique obtenue et du gradient d'indice.

L'amorceur de réticulation, qui est par exemple un photo amorceur, est un composé qui permet, par exemple thermiquement ou par radiation, d'initier la réaction de réticulation désirée.

La réticulation peut aussi être choisie parmi une réticulation par bombardement électronique et une réticulation par traitement thermique.

La fibre optique plastique obtenue par le procédé de l'invention a l'avantage d'être utilisable dans une gamme spectrale allant du visible jusqu'au proche infrarouge, tout en possédant une faible atténuation, inférieur à 1 dB/m sur l'ensemble de la gamme.

Un autre des avantages de la fibre optique obtenue selon le procédé de l'invention est de pouvoir être utilisée, à des températures élevées jusqu'à au moins 125°C de par la nature du matériau qui la compose et sa thermostabilité apportée par sa structureréticulée.

Le diamètre de la fibre obtenue est généralement compris entre 100 µm et 1 mm.

Bien entendu le procédé de fabrication d'une fibre optique plastique selon l'invention ne se limite pas aux représentations et aux exemples décrits ci-dessus. Par exemple il peut être prévu selon une variante de procéder au dépôt d'au moins une couche de revêtement sur l'une des fibres optiques plastiques obtenues précédemment, afin de la protéger du milieu extérieur et d'augmenter sa résistance mécanique.

Selon l'invention, l'étape de brmation du gradient d'indice souhaité et l'étape de réduction du diamètre de la préforme à gradient d'indice peuvent aussi être réalisées simultanément et sans écoulement c'est-à-dire sans réaliser le filage en continu.

## Revendications

1. Procédé de fabrication d'une fibre optique plastique (F₁, F₂) à gradient d'indice, l'indice de réfraction variant entre le centre et la périphérie, ledit procédé comprenant les opérations suivantes:
• la préparation d'au moins deux compositions liquides (12, 13) d'indices de réfraction différents, chaque composition comprenant au moins un polymère, un composé apte à faire varier l'indice de réfraction étant présent dans au moins l'une desdites compositions et un amorceur de réticulation étant présent dans au moins l'une desdites compositions,
• le remplissage d'un dispositif dit de formation de préforme (1, 1') avec lesdites compositions,
• la réalisation d'une préforme liquide dans ledit dispositif, l'indice de réfraction de ladite préforme présentant un gradient donné,
• le filage de ladite préforme de façon à obtenir une fibre optique plastique à gradient d'indice (F₁, F₂),
**ledit procédé étant caractérisé en ce que** la réalisation de la préforme comprend une étape sensiblement sans écoulement desdites compositions le long dudit dispositif.

2. Procédé de fabrication d'une fibre optique plastique à gradient d'indice (F₁, F₂) selon la revendication 1 **caractérisé en ce que** ladite étape sensiblement sans écoulement comporte une étape d'obtention d'un diamètre de la préforme compatible avec ledit filage.

3. Procédé de fabrication d'une fibre optique plastique (F₁, F₂) à gradient d'indice selon la revendication 1 **caractérisé en ce que** la réalisation de la préforme comporte ladite étape sensiblement sans écoulement suivie d'une étape d'obtention d'une dimension radiale de la préforme compatible avec ledit filage.

4. Procédé de fabrication d'une fibre optique plastique à gradient d'indice (F₁, F₂) selon l'une des revendications 1 à 3 **caractérisé en ce que** le remplissage est tel que les compositions sont séparées dans le dispositif de formation de préforme (1) et **en ce que** la réalisation de la préforme à gradient d'indice discontinu par saut(s) d'indice comprend la mise en contact des compositions.

5. Procédé de fabrication d'une fibre optique plastique à gradient d'indice (F₁, F₂) selon l'une des revendications 1 à 3 **caractérisé en ce que** la réalisation de la préforme à gradient d'indice continu comprend le changement de répartition entre le centre et la périphérie de la préforme d'au moins l'un des constituants d'au moins l'une des compositions, par un traitement mécanique choisi de préférence parmi la mise en rotation ou la vibration.

6. Procédé de fabrication d'une fibre optique plastique à gradient d'indice (F₁, F₂) selon l'une des revendications 1 à 5 **caractérisé en ce que** le filage est précédé d'une mise sous pression contrôlée dudit dispositif (1, 1'), la mise sous pression étant réalisée au choix par l'injection d'un gaz neutre comprimé ou par l'actionnement d'un piston dans le dispositif de formation de préforme.

7. Dispositif de formation de préforme (1, 1') pour la mise en oeuvre du procédé de fabrication d'une fibre optique plastique à gradient d'indice (F₁, F₂) selon l'une des revendications 1 à 6, dispositif contenant une première zone pour l'isolation des compositions lors dudit remplissage (Z1) et une deuxième zone de formation de préforme à gradient d'indice (Z1), **caractérisé en ce que** la première zone et la deuxième zone ont au moins une partie commune.

8. Dispositif de formation de préforme (1, 1') selon la revendication 7 **caractérisé en ce qu'**il comprend autant d'enceintes concentriques d'axe donné et de dimensions internes données que de compositions à injecter, l'enceinte externe (2) étant prolongée axialement par un élément à dimension interne variable (4) et la ou les enceintes internes (3) étant amovibles et de longueurs supérieures à la longueur de l'enceinte externe.

9. Dispositif de formation de préforme (1') selon l'une des revendications 7 ou 8 **caractérisé en ce qu'**il comprend un moyen de traitement mécanique choisi parmi un moyen de mise en vibration des compositions et un moyen de mise en rotation des compositions.

10. Dispositif de formation de préforme (1') selon la revendication 9 **caractérisé en ce que** le moyen de mise en vibration comprend un transducteur ultrasonore (8) couplé à une sonotrode (7).

11. Dispositif de formation de préforme (1, 1') selon l'une des revendications 7 à 10 **caractérisé en ce qu'**il comprend autant d'enceintes concentriques d'axe donné et de dimensions internes données que de compositions à injecter, l'enceinte externe (2) étant prolongée axialement par un élément à dimension interne variable (4) et la ou les enceintes internes (3) étant amovibles et de longueurs supérieures à la longueur de l'enceinte externe et **en ce qu'**il inclut un élément de filage (6) qui reçoit axialement ledit élément à dimension interne variable (4) et **en ce que** ledit élément de filage contient un obturateur amovible (61).
